# EUROPEAN PATENT APPLICATION

(11) **EP 2 738 051 A2**
(43) Date of publication of application: **04.06.2014**
(21) Application number: 13193590.0
(22) Date of filing: 20.11.2013
(51) Int. Cl.: B60S 1/04, B60S 1/34

(54) **Wiper system**

(30) Priority: 30.11.2012 CN 201210505331
(71) Applicant: Bosch Automotive Products (Changsha) Co., Ltd, Changsha, Hunan 410100 (CN)
(72) Inventor: Zimmer, Joachim, 410100 Changsha Hunan (CN); Suresh, Kumar, 410100 Changsha Hunan (CN)
(74) Representative: Isarpatent

(57) **Abstract**

The invention relates to a wiper system for a vehicle comprising a pivot housing (52) defining a shaft hole which extends in an axial direction, a pivot shaft (42) for supporting a wiper arm (10) of the wiper system being rotatably mounted in the shaft hole; and a fixed element (51) configured to be fixed to a body of the vehicle; wherein the fixed element (51) and the pivot housing (52) are detachably coupled to each other by means of a releasable locking structure (82, 70), the locking structure (82, 70)being in a locked state and thus the fixed element (51) and the pivot housing (52) being coupled together in normal use, and the locking structure (82, 70) being unlocked and thus the fixed element (51) and the pivot housing (52) being decoupled from each other so as to allow the pivot shaft (42) to be moved towards the body of the vehicle when an axial load or an axial component of the load exceeding a certain predefined threshold value is applied to the pivot shaft (42).

## Description

### Technical Field

The present invention relates to a wiper system for a vehicle comprising a fixed element and a pivot housing, the fixed element and the pivot housing being detachably coupled to each other by means of a locking structure.

### Background Art

People pay more and more attentions to Pedestrian Impact Protection in many countries, and regulations for this are much stricter. For example, it is very serious if pedestrian impacts on a vehicle or the head of the pedestrian hits on a wiper system of the vehicle in case of an accident, as it may injures the head of the pedestrian.

Generally, a wiper system for a vehicle comprises a wiper motor assembly arranged at a side or between a driver side and a passenger side, a link assembly connected to the wiper motor assembly, and a wiper arm assembly comprising a wiper blade which is configured for swinging reciprocatingly on a windshield. In particular, the link assembly comprises a pivot shaft and a pivot housing in which the pivot shaft is mounted, the pivot housing being fixed on a body of the vehicle.

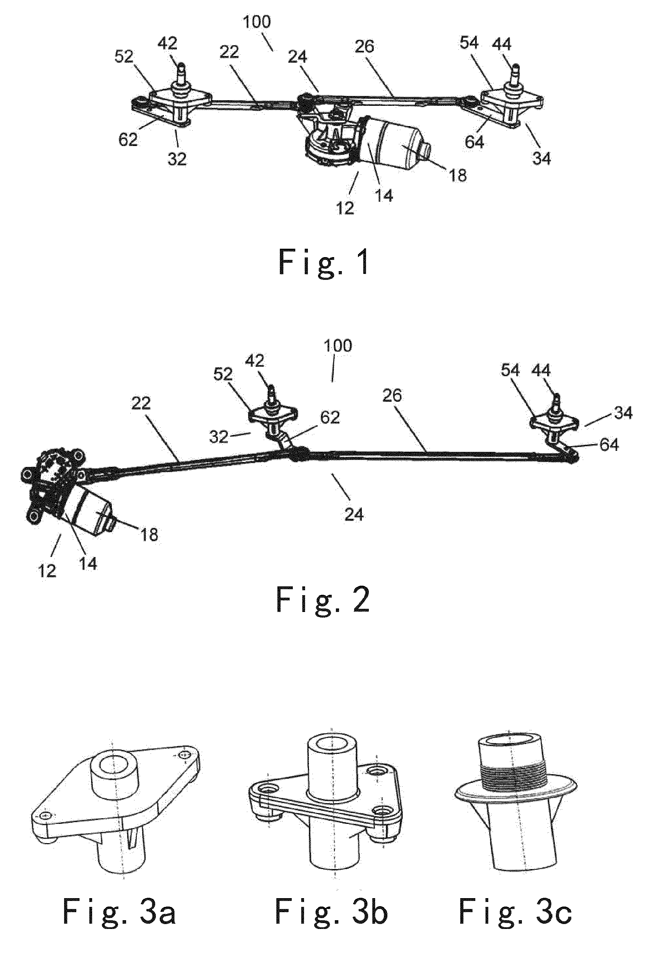

Traditionally, the pivot housing may be attached to the body of the vehicle by means of two (in Figure 3a) or three (in Figure 3b) fasteners such as bolts, or by means of its own body (in Figure 3c). The body of the pivot housing is cylindrical and formed with a shaft hole, the pivot shaft being mounted and rotatable in the shaft hole.

In one hand, the pivot housing is required to be rigid enough to ensure similar wiping angles during all situations, and for example, the pivot housing has a wiper speed V1 in case of a dry windshield and a wiper speed V2 in case of a wet windshield.

Positions of the pivot shaft and of a motor of the wiper motor assembly, and fixation points at which the pivot housing is fixed to the body of the vehicle have to be stable during normal wiping condition, even in worst conditions, such as in heavy snow. In this case, the wiper system, components thereof and all connections are subjected to high forces and torques, which requires that the pivot housing have to handle these loads without plastic bending.

In another hand, when pedestrian, in particular the head of the pedestrian hits the exposed pivot shaft of the wiper system, the pivot shaft can not reduce or absorb the collision force generated due to the rigidity of the pivot housing, the result of which is the head of the pedestrian may be subjected to serious injury.

It is desired to provide a wiper system which can overcome the above drawbacks and be suitable for all applications.

### Summary of the Invention

An object of the invention is to avoid or reduce injury to pedestrian or the head of the pedestrian that impacts on a wiper system for a vehicle.

For this purpose, according to a first aspect of the invention, A wiper system for a vehicle is provided, which comprises a pivot housing defining a shaft hole which extends in an axial direction, a pivot shaft for supporting a wiper arm of the wiper system being rotatably mounted in the shaft hole; and a fixed element configured to be fixed to a body of the vehicle; wherein the fixed element and the pivot housing are detachably coupled to each other by means of a releasable locking structure, the locking structure being in a locked state and thus the fixed element and the pivot housing being coupled together in normal use, and the locking structure being unlocked and thus the fixed element and the pivot housing being decoupled from each other so as to allow the pivot shaft to be moved towards the body of the vehicle when an axial load or an axial component of the load exceeding a certain predefined threshold value is applied to the pivot shaft.

According to a preferred embodiment, the pivot housing is an injection molded integral part.

According to a preferred embodiment, the locking structure comprises a first locking feature provided on the fixed element and/or the pivot housing, and a second locking feature provided on the pivot housing and/or the fixed element and configured for cooperating with the first locking feature.

According to a preferred embodiment, the first locking feature is configured as a hook provide on the fixed element and/or the pivot housing, and the second locking feature comprises a surface perpendicular to the axial direction which is provided on the pivot housing and/or the fixed element.

According to a preferred embodiment, the first locking feature is configured as a hook provide on the fixed element and/or the pivot housing, and the second locking feature comprises a recess provided on the pivot housing and/or the fixed element which is configured to be mated with the hook.

According to a preferred embodiment, the fixed element comprises a speed nut, and preferably the fixed element is a metal part.

According to a preferred embodiment, the first locking feature comprises an inner edge of the speed nut, and the second locking feature comprises an outer surface of the pivot housing or outer threads provided on an outer surface of the pivot housing.

According to a preferred embodiment, the pivot housing is provided with a boss, the boss being configured to be mated with a hole provided in the body of the vehicle for locating the pivot housing on the body of the vehicle.

According to a preferred embodiment, the pivot housing comprises a first member connected to the body of the vehicle and a second member which is movable relative to the first member, the pivot housing and the fixed element being engaged with each other when the second member is engaged with the fixed element, and the second member of the pivot housing and the pivot shaft being able to move toward the body of the vehicle relative to the first member of the pivot housing when the second member of the pivot housing and the fixed element are disengaged from each other.

According to a preferred embodiment, the first member of the pivot housing is provided with a hole therethrough and is configured to be fastened to the body of the vehicle by means of a fastener, preferably a bolt, passing through the hole.

According to a preferred embodiment, the first locking feature comprises an inner edge of the speed nut, and the second locking feature comprises an outer surface of the second member of the pivot housing or outer threads provided on an outer surface of the second member of the pivot housing.

According to a preferred embodiment, the pivot housing is a part made of a deformable material, for example, a plastic material without fiber glass.

A wiper system according to the invention comprises a fixed element and a pivot housing which are coupled to each other by means of a locking structure. The locking structure is configured to be unlocked when an axial load or an axial component of the load exceeding a certain predefined threshold value is applied to a pivot shaft supporting a wiper arm of the wiper system. In particular, a hook of the fixed element or the pivot housing is moved out of a hole or recess of the pivot housing or the fixed element, or a speed nut is disengaged from the pivot housing. The pivot shaft and the pivot housing or a portion of the pivot housing are moved toward the vehicle body together, a collision force generated is reduced at least partially or absorbed, and injury to the pedestrian is reduced or avoided. Additionally, the wiper system according to the invention comprising the pivot housing has a relatively low cost.

### Brief Description of the Drawings

The above and other features and advantages of the invention will be better understood from the description of preferred embodiments of the invention in conjunction with the drawings, in which:
Figure 1 is an illustrative view of a Loose Link Wiper system with a centre drive, in which a wiper motor assembly of the wiper system is located at a position between a driver side and a passenger side;
Figure 2 is an illustrative view of a Loose Link Wiper system with a serial drive, in which a wiper motor assembly of the wiper system is not located between a driver side and a passenger side but outside the driver side;
Figures 3a-3c show three different pivot housings of wiper systems according to the prior art which can be fixed to a body of a vehicle in three different ways;
Figure 4a is an illustrative view of a portion of a wiper system according to a first preferred embodiment of the invention, and Figure 4b is an enlarged view of a detail x in Figure 4a;
Figure 4c is an illustrative view corresponding to Figure 4a in a case that a load is applied to a pivot shaft, and Figure 4d is an enlarged view of a detail y in Figure 4c;
Figure 5a is an illustrative view of a portion of a wiper system according to a second preferred embodiment of the invention, and Figure 5b is an enlarged view of a detail x in Figure 5a;
Figure 5c is an illustrative view corresponding to Figure 5a in a case that a load is applied to a pivot shaft, and Figure 5d is an enlarged view of a detail y in Figure 5c;
Figure 6a is an illustrative view of a portion of a wiper system according to a third preferred embodiment of the invention, and Figure 6b is an enlarged view of a detail x in Figure 6a;
Figure 6c is an illustrative view corresponding to Figure 6a in a case that a load is applied to a pivot shaft, and Figure 6d is an enlarged view of a detail y in Figure 6c;
Figure 7a is an illustrative view of a portion of a wiper system according to a fourth preferred embodiment of the invention, and Figure 7b is an illustrative view corresponding to Figure 7a in a case that a load is applied to a pivot shaft; and
Figure 8a is an illustrative view of a portion of a wiper system according to a fifth preferred embodiment of the invention, and Figure 8b is an illustrative view corresponding to Figure 8a in a case that a load is applied to a pivot shaft.

### Detailed Description of Preferred Embodiments

In the drawings, identical or functionally similar elements and devices, unless otherwise stated, are given the same reference numerals.

A wiper system according to the invention is equipped to a vehicle to keep dirt, defoliation, airborne road debris, precipitations and the like clear of a windshield and to keep a driver's vision clear.

Figures 1 and 2 show two types of Loose Link Wiper Systems 100 widely used at present.

A wiper system 100 for a vehicle comprises a drive assembly 12, also referred to as a wiper motor assembly, for providing power for the wiper system 100. The drive assembly 12 comprises a motor 18 and a reducer mechanism 14. The motor 18 may be a Permanent Magnetic DC motor, and the reducer mechanism 14 can be any reducer mechanism well known in the art. The motor 18 and the reducer mechanism 14 are fixed to a vehicle body by means of a motor housing and a gear housing respectively. In Figure 1, the drive assembly 12 of the wiper system 100 is arranged between a drive side and a passenger side, and in Figure 2, the drive assembly 12 of the wiper system 100 is arranged outside the drive side.

A link assembly 24 which is connected to the drive assembly 12 of the wiper system 100 comprises a driver side link 22 and a passenger side link 26. In Figure 1, both the driver side link 22 and the passenger side link 26 of the wiper system 100 are connected with the drive assembly 12 there between, and in Figure 2, the driver side link 22 is connected to the drive assembly 12, and the passenger side link 26 is in series connected with the driver side link 2.

The link assembly 24 of the wiper system 100 for the vehicle further comprises two pivot shaft assemblies, a pivot shaft assembly 32 at the driver side for connecting the driver side link 22 of the link assembly 24 and a wiper arm assembly at the driver side (not shown), and a pivot shaft assembly 34 at the passenger side for connecting the passenger side link 26 of the link assembly 24 and a wiper arm assembly at the passenger side (not shown).

In addition, the wiper system 100 for the vehicle further comprises the two wiper arm assemblies (not shown) mentioned above, one at the driver side and the other at the passenger side respectively. Each of the driver side wiper arm assembly and the passenger side wiper arm assembly comprises a wiper arm which is configured for supporting a wiper blade, the wiper blade being configured as an actuator of the wiper system and being driven by the drive assembly 12 to swing reciprocatingly.

The pivot shaft assemblies 32 and 34 of the wiper system 100 according to the invention each comprise pivot shafts 42 and 44, pivot plates 62 and 64, and pivot housings 52 and 54 in which the pivot shafts 42 and 44 are mounted and rotated. The pivot shafts 42 and 44 each comprise lower ends connected to the pivot plates 62 and 64 and upper ends connected to the wiper arm assemblies. In the context, the direction along which the pivot shaft 42 extends is defined as an axial direction, and a "downward" direction refers to the direction from the upper end connected to the pivot plate to the lower end connected to the wiper arm assembly.

The pivot housings 52 and 54 of the wiper system 100 are fixed to the vehicle body. Upon switching on the motor 18, the rotational movement of the motor 18 is transferred to the link assembly 24 via the reducer mechanism 14 with the rotational speed reduced. When the pivot plates 62 and 64 are actuated by the link assembly 24, the pivot shafts 42 and 44 are rotated in the pivot housings 52 and 54 respectively, so that the wiper arm assemblies at the driver side and at the passenger side swing reciprocatingly on a front or rear windshield glass.

The pivot shaft assembly of the wiper system 100 according to the invention comprises a first element fixed to the vehicle body, also called a fixed element, and a second element in which the pivot shaft mounted, which is the pivot housing.

In use, the fixed element and the pivot housing are coupled to each other by means of a locking structure, so that the corresponding wiper arm assembly and the wiper blade on the corresponding wiper arm assembly are attached to the vehicle body. When an axial load or an axial component of the load exceeding a certain predefined threshold value is applied to the pivot shaft in a downward direction, such as pedestrian or the head of the pedestrian collides the pivot shaft of the wiper system, the fixed element and/or the pivot housing according to the invention are deformed or broken and decoupled and the locking structure is unlocked, so that the corresponding wiper arm assembly and the pivot shaft are moved toward the vehicle body. Therefore, a collision force generated is at least partially reduced or absorbed, and the pedestrian is protected from being injured to a significant extent.

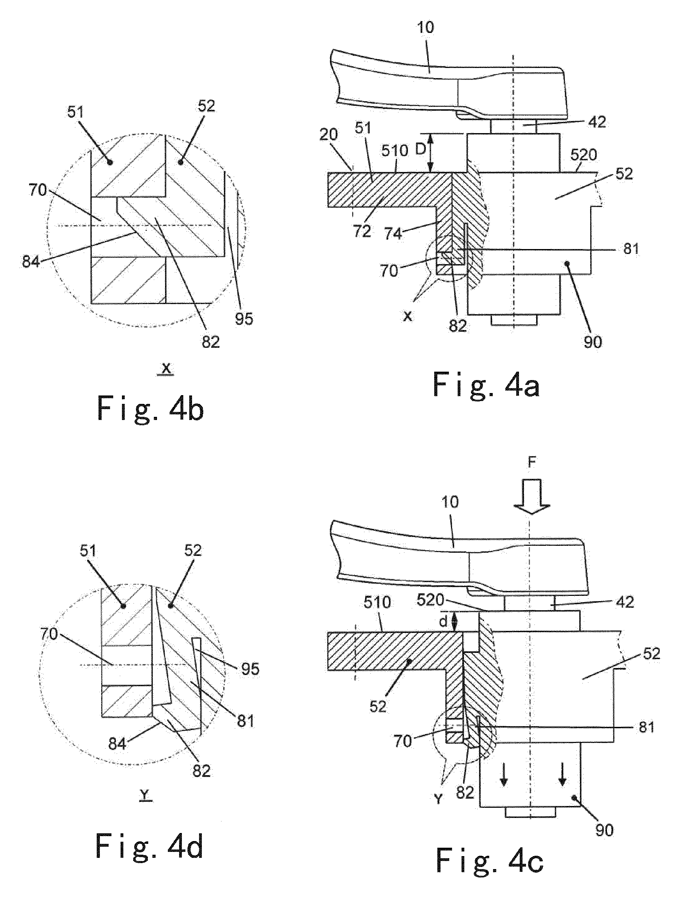

Detail embodiments of the wiper system according to the invention are described with reference to the figures. Figures 4a-4d show a portion of the driver side pivot shaft assembly 32 of the wiper system 100 according to a first preferred embodiment of the invention. It is apparent to those skilled in the art that the description with reference to the driver side pivot shaft assembly 32 also applies to the passenger side pivot shaft assembly 34, not only in the first preferred embodiment shown in figures 4a-4d but also in other preferred embodiments illustrated according to the invention.

As shown in Figures 4a-4d, the pivot shaft assembly 32 of the wiper system 100 comprises a fixed element 51 and the pivot housing 52. The fixed element 51 comprises a flange 72 fixed to the vehicle body and a second portion 74 engaged with the pivot housing 52. The flange 72 of the fixed element 51 is provided with a fixation feature 20 which is configured for fixing the fixed element 51 to the vehicle body. In this embodiment, the fixation feature 20 may be a through hole through which a fastener such as a bolt can pass. For example, two or more through holes may be provided on the fixed element 51 uniformly.

The pivot housing 52 may be an injection molded integral part. The pivot housing 52 may be made of a plastic material, preferably a plastic material without fiber glass, so that the pivot housing 52 has a good bearing performance. The pivot housing 52 is formed with a shaft hole in which the pivot shaft 42 can be mounted, the pivot shaft 42 being able to rotate in the pivot housing 52 made of a plastic material, requiring no bushing.

The locking structure of the wiper system 100 according to the first preferred embodiment of the invention comprises a first locking feature provided on the fixed element 51 and a second locking feature provided on the pivot housing 52.

The first locking feature is configured as a hole 70 provided on the second portion 74 of the fixed element 51. The second locking feature comprises a leg 81 and a hook 82 which are provided on the pivot housing 52 and elastically deformable. In an undeformed state, the leg 81 extends substantially parallel to the axial direction and the hook 82 extends substantially perpendicular to the leg 81. Through receiving the hook 82 in the hole 70 of the fixed element 51, the lock structure is locked and the fixed element 51 and the pivot housing 52 are engaged together.

The hook 82 of the pivot housing 52 is formed with an inclined surface 84, and a gap 95 is formed between the leg 81 of the pivot housing 52 and a body 90 of the pivot housing 52.

In normal use, the hook 82 of the pivot housing 52 is accommodated in the hole 70 of the fixed element 51, and so the fixed element 51 and the pivot housing 52 are engaged together. By means of the fixation feature 20 of the fixed element 51, the wiper arm assembly, the pivot shaft 42 and the pivot housing 52 are attached to the vehicle body.

When an axial load F or an axial component of the load F exceeding the predefined threshold value is applied to the pivot shaft 42, the hook 82 of the pivot housing 52 tends to be moved out of the hole 70 of the fixed element 51 due to the presence of the inclined surface 84, that is, the hook 82 of the pivot housing 52 is deformed into the gap 95 as shown in Figures 4c and 4d. The locking structure is unlocked and the fixed element 51 and the pivot housing 52 are separated from each other, as a result of which the pivot shaft 42 and the pivot housing 52 are moved toward the vehicle body together. In this way, the pedestrian is protected from being injured to a significant extent.

As can be appreciated for those skilled in the art, the hole 70 of the fixed element 51 may be configured as a blind hole closed at one end, instead of a through hole as shown in Figures 4a-4d.
Figure 4a shows a distance D between a surface 520 of the pivot housing 52 and a surface 510 of the fixed element 51, and Figure 4c shows a corresponding distance d after the pivot housing 52 and the pivot shaft 42 are moved toward the vehicle body together, the distance d being smaller than the distance D.

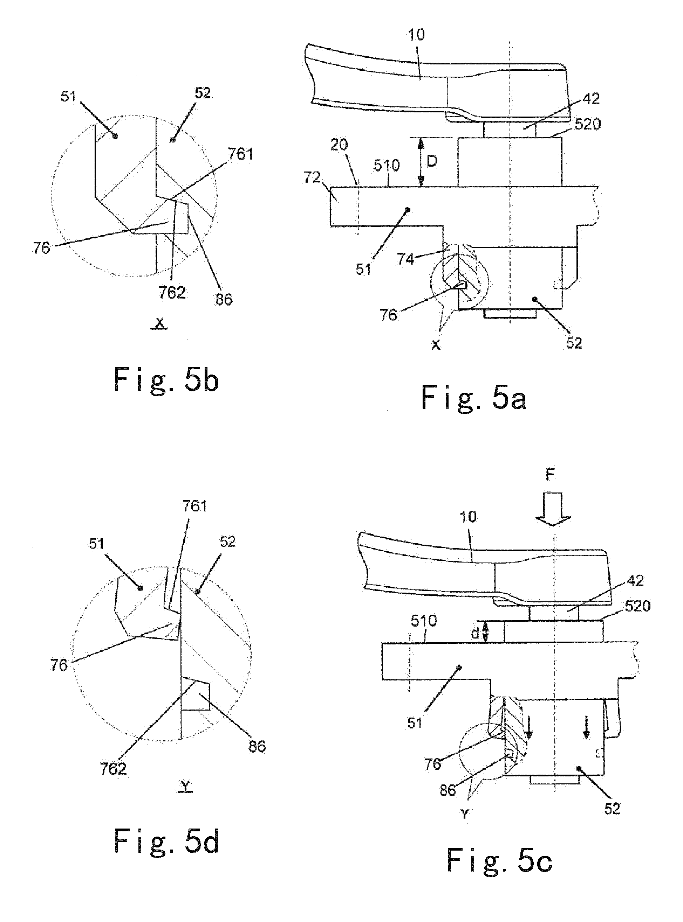

Figures 5a-5d shows a portion of a wiper system 100 according to a second embodiment of the invention. A fixed element 51 of the wiper system 100 comprises a surface 510, and a pivot housing 52 of the wiper system 100 comprises a surface 520, there being a distance D between the surface 510 and the surface 520 during normal use.

Similarly, the fixed element 51 of the wiper system 100 comprises a flange 72 fixed to a vehicle body and a second portion 74 engaged with the pivot housing 52. Different from the above embodiment, a locking structure according to this embodiment comprises a hook 76 on the second portion 74 of the fixed element 51, and a recess 86 on the pivot housing 52 which is configured for receiving the hook 76 of the fixed element 51, as shown in Figure 5a and in the enlarged view of Figure 5b.

The hook 76 of the fixed element 51 comprises an inclined surface 761 which is configured to be engaged with an inclined surface 762 of the pivot housing 52.

When an axial load F or an axial component of the load F exceeding the predefined threshold value is applied to the pivot shaft 42 in a downward direction, the inclined surface 762 of the pivot housing 52 is moved along the inclined surface 761 of the hook 76 of the fixed element 51, and the hook 76 of the fixed element 51 is deformed elastically away from a body 90 of the pivot housing 52 and disengaged from the recess 86 of the pivot housing 52. The locking structure is unlocked, and the pivot housing 52 and the pivot shaft 42 are moved toward the vehicle body together, as a result of which the load F is at least partially reduced or absorbed.

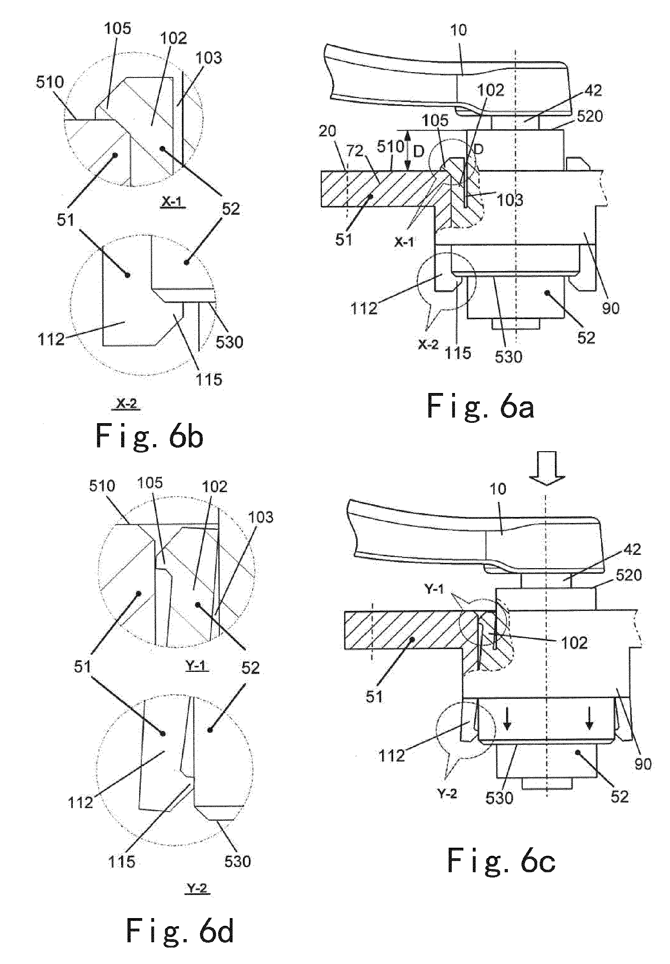

A portion of a wiper system 100 according to a third embodiment of the invention is shown in Figures 6a-6d. Figures 6a and 6b show a fixed element 51 and a pivot housing 52 in normal use, in which a locking structure is in a locked state. Figures 6c and 6d show the fixed element 51 and the pivot housing 52 are moved downward under a load F in order to at least partially reduced or absorb the load F, in which the locking structure is in an unlocked state.

With reference to Figures 6a and 6b, the wiper system 100 according to the invention comprises the fixed element 51 and the pivot housing 52. Similarly, the fixed element 51 comprises a flange 72 fixed to a vehicle body and a second portion 74 engaged with the pivot housing 52. Different from the above embodiments, the fixed element 51 and the pivot housing 52 of the wiper system 100 comprises a double-locking structure.

In particular, a first locking structure comprises a leg 102 and a hook 105 which are provided on the pivot housing 52 approximate to an upper end thereof. A gap 103 is provided between the leg 102 and a body 90 of the pivot housing 52 so as to allow the leg 102 and the hook 105 to be deformed into the gap 103. The hook 105 of the pivot housing 52 is configured to be engaged to a surface 510 of the fixed element 51 in normal use and be disengaged from the surface 510 of the fixed element 51 when an axial load F or an axial component of the load F exceeding the certain threshold value is applied to the pivot shaft 42.

A second locking structure comprises a leg 112 and a hook 115 which are provided on the fixed element 51 approximate to a lower end thereof. The hook 115 of the fixed element 51 is configured to be engaged to a surface 530 of the pivot housing 52 in normal use and be disengaged from the surface 530 of the pivot housing 52 when an axial load F or an axial component of the load F exceeding the certain threshold value is applied to the pivot shaft 42.

In use, the fixed element 51 is fixed to the vehicle body through two or more fixation features 20 distributed uniformly, and a pivot shaft 42 supporting a wiper arm 10 is accommodated in a shaft hole formed in the pivot housing 52. The hook 115 of the fixed element 51 is engaged on the surface 530 of the pivot housing 52, and the hook 105 is engaged on the surface 510 of the fixed element 51. When an axial load F or an axial component of the load F exceeding the predefined threshold value is applied to the pivot shaft 42, the leg 112 and the hook 115 of the fixed element 51 is deformed outward and disengaged from the surface 530 of the pivot housing 52, and the leg 102 and the hook 105 of the pivot housing 52 is deformed into the gap 103 and disengaged from the surface 510 of the fixed element 51. In this way, the two locking structures are unlocked, so that the pivot shaft 42 and the pivot housing 52 are moved toward the vehicle body together. In this way, the load F is reduced at least partially or absorbed and the pedestrian is protected from being injured to a significant extent.

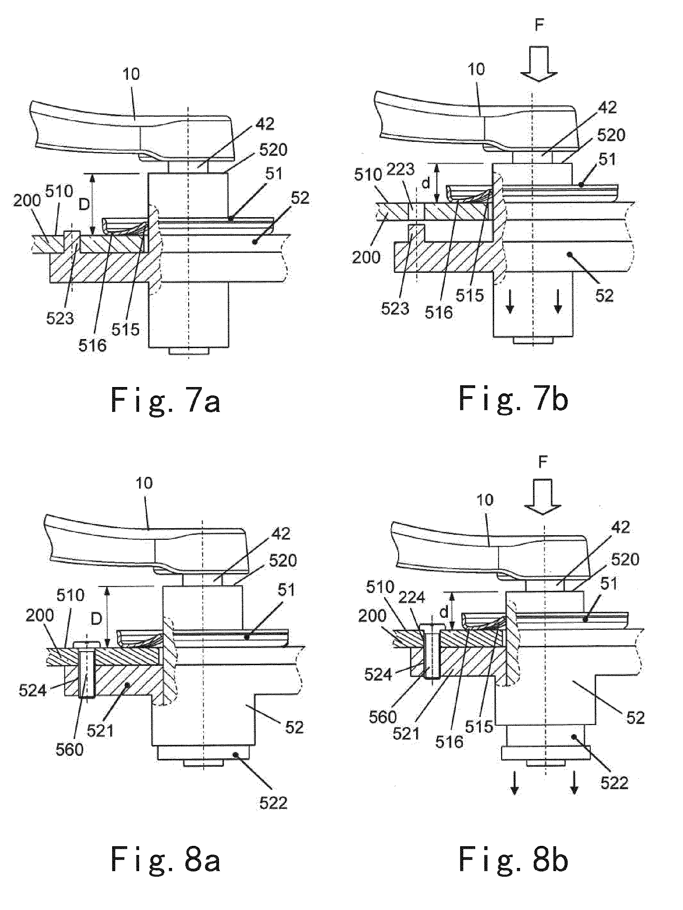

A wiper system 100 according to a fourth embodiment of the invention is described with reference to Figures 7a and 7b.

A pivot shaft 42 of a wiper arm 10 is mounted in a shaft hole formed in a pivot housing 52. The pivot housing 52 is located onto a vehicle body 200 by means of a locating boss 523, and the vehicle body 200 comprises a locating hole 223 which is configured for mating with the locating boss 523 of the pivot housing 52.

A fixed element which is engaged with the pivot housing 52 in this embodiment is configured as a speed nut 51. The speed nut 51 comprises an inner edge 515 and an actuating portion 516 in a form of convex.

In normal use, the actuating portion 516 of the speed nut 51 is positioned against the vehicle body 200, and the inner edge 515 of the speed nut 51 is engaged with an outer surface of the pivot housing 52 to prevent the pivot housing 52 from being moved axially. Preferably, the outer surface of the pivot housing 52 may be provided with outer threads, so that the inner edge 515 of the speed nut 51 can be engaged into the outer threads. The inner edge 515 of the speed nut 51 and the outer surface of the pivot housing 52 thus constitute a locking structure in this embodiment.

When an axial load F or an axial component of the load F exceeding the predefined threshold value is applied to the pivot shaft 42, the pivot housing 52 and the speed nut 51 are disengaged from each other and the locking structure is unlocked, so that the wiper arm 10, the pivot shaft 42 and the pivot housing 52 are moved toward the vehicle body together. In this way, the pedestrian is protected from being injured to a significant extent.

A fifth embodiment of the invention is illustrated in Figures 8a-8b as a variant of the fourth embodiment.

Different from the fourth embodiment, a pivot housing 52 of a wiper system 100 according to this embodiment comprises a first member 521 connected to a vehicle body 200 and a second member 522 mounted in the first member 521 and engaged with a pivot shaft 42 of the wiper system 100. The first member 521 of the pivot housing 52 is provided with a threaded hole 524. Corresponding to the threaded hole 524, a through hole 224 is provided on a vehicle body 200. The through hole 224 of the vehicle body 200 can be configured as a through hole or a threaded hole as desired. A fastener 560, such as a bolt or a screw, passes through the through hole 224 and the threaded hole 524 to fasten the first member 521 of the pivot housing 52 on the vehicle body 200. Of course, the threaded hole 524 of the pivot housing 52 can be a blind threaded hole with one end closed.

In another embodiment, the fastener 560 passes through the through hole 224 of the vehicle body 200 and extends out of the threaded hole 524 of the pivot housing 52 and is fastened by means of a nut. In this case, the threaded hole 524 can be replaced by a through hole.

As same as the fourth embodiment, an actuating portion 516 of a speed nut 51 is positioned against the vehicle body 200, and an inner edge 515 of the speed nut 51 is engaged with an outer surface of the second member 522 of the pivot housing 52 to prevent the second member 522 of the pivot housing 52 from being moved axially relative to the first member 521 and the vehicle body 200. Alternatively, the outer surface of the second member 522 can be provided with outer threads.

When an axial load F or an axial component of the load F exceeding the predefined threshold value is applied to the pivot shaft 42, the second member 522 of the pivot housing 52 and the speed nut 51 are disengaged from each other, and so the wiper arm 10, the pivot shaft 42 and the second member 522 of the pivot housing 52 are moved toward the vehicle body together. In this way, the pedestrian is protected from being injured to a significant extent.

In general, a locking structure of a fixed element and a pivot housing of a wiper system according to the invention can be configured to be unlocked when an axial load or an axial component of the load exceeding a certain predefined threshold value is applied to the pivot shaft. In particular, a hook of the fixed element or of the pivot housing is moved out of a hole or recess of the pivot housing or of the fixed element, or a speed nut is disengaged from the pivot housing, so that the pivot shaft and the pivot housing or a portion of the pivot housing are moved toward the vehicle body together, a collision force generated is reduced at least partially or absorbed, and injury to the pedestrian is reduced or avoided.

Several embodiments of the invention have been described, but the invention is not limited to the embodiments described above and shown in the drawings. Rather, the features included in one embodiment can be included in other embodiments of the invention, and features in different embodiments can be combined into new embodiments. Various substitutions and changes can be made to the structures and forms described herein without departing from the spirit and scope of the invention defined by the claims

## Claims

1. A wiper system for a vehicle comprising:
a pivot housing defining a shaft hole which extends in an axial direction, a pivot shaft for supporting a wiper arm of the wiper system being rotatably mounted in the shaft hole;
and
a fixed element configured to be fixed to a body of the vehicle;
wherein the fixed element and the pivot housing are detachably coupled to each other by means of a releasable locking structure, the locking structure being in a locked state and
thus the fixed element and the pivot housing being coupled together in normal use, and
the locking structure being unlocked and thus the fixed element and the pivot housing being decoupled from each other so as to allow the pivot shaft to be moved towards the body of the vehicle when an axial load or an axial component of the load exceeding a certain predefined threshold value is applied to the pivot shaft.

2. The wiper system according to claim 1, wherein the pivot housing is an injection molded integral part.

3. The wiper system according to claim 1 or 2, wherein the locking structure comprises a first locking feature provided on the fixed element and/or the pivot housing, and a second locking feature provided on the pivot housing and/or the fixed element and configured for cooperating with the first locking feature.

4. The wiper system according to claim 3, wherein the first locking feature is configured as a hook provide on the fixed element and/or the pivot housing, and the second locking feature comprises a surface perpendicular to the axial direction which is provided on the pivot housing and/or the fixed element.

5. The wiper system according to claim 3, wherein the first locking feature is configured as a hook provide on the fixed element and/or the pivot housing, and the second locking feature comprises a recess provided on the pivot housing and/or the fixed element which is configured to be mated with the hook.

6. The wiper system according to claim 3, wherein the fixed element comprises a speed nut, and preferably the fixed element is a metal part.

7. The wiper system according to claim 6, wherein the first locking feature comprises an inner edge of the speed nut, and the second locking feature comprises an outer surface of the pivot housing or outer threads provided on an outer surface of the pivot housing.

8. The wiper system according to claim 6 or 7, wherein the pivot housing is provided with a boss, the boss being configured to be mated with a hole provided in the body of the vehicle for locating the pivot housing on the body of the vehicle.

9. The wiper system according to claim 6, wherein the pivot housing comprises a first member connected to the body of the vehicle and a second member which is movable relative to the first member, the pivot housing and the fixed element being engaged with each other when the second member is engaged with the fixed element, and the second member of the pivot housing and the pivot shaft being able to move toward the body of the vehicle relative to the first member of the pivot housing when the second member of the pivot housing and the fixed element are disengaged from each other.

10. The wiper system according to claim 9, wherein the first member of the pivot housing is provided with a hole therethrough and is configured to be fastened to the body of the vehicle by means of a fastener, preferably a bolt, passing through the hole.

11. The wiper system according to claim 9 or 10, wherein the first locking feature comprises an inner edge of the speed nut, and the second locking feature comprises an outer surface of the second member of the pivot housing or outer threads provided on an outer surface of the second member of the pivot housing.

12. The wiper system according to any one of claims 1 to 11, wherein the pivot housing is a part made of a deformable material, for example, a plastic material without fiber glass.
